# EUROPEAN PATENT APPLICATION

(11) **EP 2 402 839 A2**
(43) Date of publication of application: **04.01.2012**
(21) Application number: 11171066.1
(22) Date of filing: 22.06.2011
(51) Int. Cl.: G06F 3/01, G06F 17/30

(54) **System and method for indexing content viewed on an electronic device**

(30) Priority: 30.06.2010 US 827145
(71) Applicant: Sony Ericsson Mobile Communications AB, 221 88 Lund (SE)
(72) Inventor: Thörn, Ola, 216 12 Limhamn (SE)
(74) Representative: Aurell, Henrik

(57) **Abstract**

An apparatus and method for collecting heart rate information associated with a user while the user is viewing and/or listening to multimedia content and/or experiencing real-life events on an electronic device (10). The heart rate information is interpreted to determine a level of physical arousal. The level of physical arousal may be stored with the multimedia content. Interpretation of emotional characteristic can provide several gradations of user's preference (e.g., the degree to which the user is aroused).

## Description

### TECHNICAL FIELD OF THE INVENTION

The technology of the present disclosure relates generally to indexing content based on one or more physical characteristics associated with a user of an electronic device while the user perceiving content.

### BACKGROUND

Many types of electronic devices (e.g., portable communication devices, computers, cameras, camcorders, etc.) are capable of capturing and/or displaying still images and/or videos. Such images and/or videos are generally stored on a digital storage device (e.g., a memory or hard disk drive, etc.) associated with the electronic device.

Digital storage devices are increasing in size and in many cases may store thousands of forms of multimedia content (e.g., images, videos, etc.) on a single storage device. The large size of digital storage devices enables an enormous amount of content to be stored on a single digital storage device. With the increase in the size of the digital storage device and the quantity of multimedia content stored therein, it is becoming more and more difficult to find multimedia content on the digital storage device that is especially meaningful to a user or users of the electronic device. Some prior art systems may utilize metadata containing key words to enable a user to search for multimedia content. One problem with prior art systems is that they do not provide a mechanism to identify content that the user had an emotional reaction to.

### SUMMARY

Based on the foregoing, a need exists for a device and method for determining whether a user had a reaction to multimedia content rendered on the electronic device.

The present disclosure describes a system and method that quantifies physical arousal and indexes the physical arousal with content rendered by the mobile device in order to facilitate finding content in which the user had an emotional reaction when rendered on the mobile device.

One aspect of the invention relates to an electronic device, including: a rendering device for rendering content to an associated user; a sensor for detecting at least one physical characteristic of the associated user while perceiving the content on the electronic device; a memory for storing user profile information, wherein the user profile information includes historical data for the one or more physical characteristics sensed by the sensor and physical arousal information for the associated user; a controller coupled to the rendering device and the sensor, wherein when the rendering device renders content to the associated user, the controller causes the sensor to capture at least one physical characteristic associated with the user; the controller calculates the physical arousal information associated with the rendered content; and the controller stores content information associated with the rendered content and the physical arousal information in the memory.

Another aspect of the invention relates to the memory including a database that associates the rendered content and the physical arousal information.

Another aspect of the invention relates to the database including a location for retrieving the content.

Another aspect of the invention relates to the memory storing the physical arousal information in a computer file associated with the rendered content.

Another aspect of the invention relates to the physical arousal information being stored as metadata in the computer file associated with the rendered content.

Another aspect of the invention relates to the sensor being a heart rate monitor that monitors heart rate of the associated user while the user is perceiving the content.

Another aspect of the invention relates to the sensor is housed within a housing of the electronic device.

Another aspect of the invention relates to 8. The electronic device of claim 5, therein the sensor is housed apart from the rendering device and transmits acquired physical characteristic data of the associated user to the electronic device wirelessly.

Another aspect of the invention further includes a front facing camera that is configured to be operative when the user is perceiving the content on the display.

Another aspect of the invention relates to the sensor being a pressure sensor that measures a pressure associated with the user's handling of the electronic device.

Another aspect of the invention relates to the sensor being a moisture sensor that measures a moisture associated with the user's handling of the electronic device.

Another aspect of the invention relates to the content being at least one selected from a group consisting of an image, a video, a song, a web page, a blog.

Another aspect of the invention relates to the rendering device being a display.

Another aspect of the invention relates to the rendering device being a speaker.

One aspect of the invention relates to a method of indexing content rendered on a mobile telephone, the method including: rendering content on a rendering device of an electronic device to an associated viewer; acquiring viewer information from a detector at a time substantially contemporaneous with the step of rendering content, wherein the viewer information includes at least one of a physical characteristic associated with the viewer while perceiving the rendered content; processing the viewer information to a physical arousal rating; and storing the physical arousal rating and a location for retrieving the content in a memory of the mobile telephone.

Another aspect of the invention relates to the step of acquiring viewer information being triggered by a determination that the rendering device is displaying content, wherein a front facing camera is used to determine whether the rendering device is displaying content.

Another aspect of the invention relates to the physical arousal rating and location for retrieving the content for a plurality of content sources are stored in a database for retrieval of the content based on the physical arousal rating.

Another aspect of the invention relates to further including displaying at least some of the content stored in the database as function of the physical arousal rating.

Another aspect of the invention relates to the database being searchable based at least upon the physical arousal rating associated with the viewer.

Another aspect of the invention relates to a method of indexing a real-life event experienced by a user of a mobile telephone, the method including: acquiring viewer information from a detector at a time substantially contemporaneous with a real-life event of the mobile telephone, wherein the viewer information includes at least one of a physical characteristic associated with the viewer while perceiving the real-life event; processing the viewer information to a physical arousal rating; and storing the physical arousal rating and a location for retrieving information about real-life event in a memory of the mobile telephone.

Another aspect of the invention relates to a computer program stored on a machine readable medium in a memory of an electronic device, the program being suitable for indexing content rendered on the electronic device, wherein when the computer program is loaded in memory and executed causes the electronic device to acquire viewer information from a detector communicatively coupled, wherein the viewer information is acquired at a time substantially contemporaneous content being rendered by the electronic device, wherein the viewer information includes at least one of a physical characteristic associated with the viewer while perceiving the rendered content; processing the viewer information to determine a physical arousal rating; and storing the physical arousal rating and a location for retrieving the content in a memory of the electronic device

These and further features will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the scope of the claims appended hereto.

Features that are described and/or illustrated with respect to one embodiment may be used in the same way or in a similar way in one or more other embodiments and/or in combination with or instead of the features of the other embodiments.

### BRIEF DESCRIPTION OF THE DRAWINGS

FIGs. 1 and 2 are use cases for an exemplary electronic device and sensor in accordance with aspects of the present invention.
FIGs. 3-5 are exemplary embodiments of electronic devices in accordance with aspects of the present invention.
FIG. 6 is a schematic block diagram of the exemplary electronic device of FIG. 5.
FIG. 7 is an exemplary method in accordance with aspects of the present invention.
FIG. 8 is an exemplary grid for displaying indexed content in accordance with aspects of the present invention.
FIG. 9 is an exemplary method in accordance with aspects of the present invention.
FIG. 10 is a schematic diagram of an exemplary communication system in accordance with aspects of the present invention.

### DETAILED DESCRIPTION OF EMBODIMENTS

Embodiments will now be described with reference to the drawings, wherein like reference numerals are used to refer to like elements throughout. It will be understood that the figures are not necessarily to scale.

Described below in conjunction with the appended figures are various embodiments of an improved system and method for indexing, retrieving and sharing multimedia content based on a user's physical arousal while perceiving the content with an electronic device. In the illustrated embodiments, rendering devices that form part of the system for rendering multimedia content may be embodied as a display and/or speaker that are made part of respective electronic device.

It will be appreciated that aspects of the disclosed system and method may be applied to a wide variety of operational contexts, such as, but not limited to, the use of rendering devices on mobile telephones, media players, gaming devices, computers, computer displays, portable computers, tablet devices, etc.). A sensor may be used to capture one or more physical and/or physiological characteristics associated with the user while the user is perceiving the rendered content and the user's physical arousal may be determined from the captured one or more physical characteristics. Exemplary sensors include heart rate monitors, grip pressure sensors, cameras, blood pressure monitors, moisture sensors, breathing sensors, brain sensors, etc.

The present invention provides an apparatus and method for collecting physical and/or physiological information associated with a user while the user perceives multimedia content on the mobile telephone. The physical and/or physiological information of the user are interpreted to determine a physical arousal rating. The physical arousal rating may be stored with the multimedia content in metadata or separately, for example. Interpretation of physical arousal rating may provide several gradations of user's preference (e.g., the degree to which the user has a reaction to the perceived multimedia content). Exemplary viewer characteristics include, for example, physical characteristics (e.g., facial expressions, eye movement, pupil size and shape, muscle tremors, etc.), audible signals from the user, physiological characteristics (e.g., blood pressure, breathing rate, heart rate, galvanic skin response, brain activity, etc).

In one embodiment, the mobile telephone includes a rendering device for rendering multimedia content to a user or capturing a real-life event. Exemplary rendering devices include, for example, a display, a speaker, headphones, etc. for presenting multimedia content to an associated user. The multimedia content may include a multimedia component and a metadata component. The electronic device may include a sensor configured to acquire physiological information associated with the user while the user perceives the rendered content. In addition, the sensor may also acquire physiological information while the user is experiencing a real-life event (e.g., viewing a computer application or Internet site, attending a meeting or any event stored in the user's calendar, etc.) with the user's mobile telephone. With respect to attending an event, the user's physical arousal may be determined for any event that the user experiences. In general, it is preferable to correlate a user's physical arousal to an event stored in the user's mobile telephone. For example, if the user is attending a meeting, the user's physical arousal during the meeting may be correlated to the event.

The sensor may be embodied in the mobile telephone or be an external device (e.g., a chest strap, wrist watch, etc.) that is configured to transmit heart rate information or other suitable information from the sensor to the mobile telephone. While one embodiment discloses a heart rate monitor, one of ordinary skill in the art will appreciate that other suitable sensors may be selected based on the type of physical and/or physiological information to be obtained from the user to measure physical arousal.

The mobile telephone includes a controller coupled to the display and sensor, wherein when the rendering device presents multimedia content to the associated user, the controller causes the detector to capture viewer heart rate information. The electronic device further includes a physical arousal module coupled to the controller, wherein the module determines at least one state of physical arousal associated with the viewer based on the captured viewer information.

As used herein, a scene is defined as something seen by a viewer. It can be the place where an action or event occurs, an assemblage of one or more people and/or objects seen by a viewer, a series of actions and events, a landscape or part of a landscape, etc. Scenes recorded or displayed by an image capture device or a viewing device are referred to as multimedia content. Examples of image capture devices include mobile telephones, digital still cameras, video cameras, camcorders, computers, laptops, etc.

People capture images of different scenes for a variety of purposes and applications. Capturing memorable events is one example of an activity that ordinary people, professional photographers, or journalists alike have in common. These events are meaningful and provide the user with some degree of physical arousal. Images of such events attract special attention, elicit memories, and evoke emotions, or, in general terms, they produce physical and/or psychological reactions. Often these reactions are accompanied by physiological and/or behavior changes.

Information that represents a user's physical, psychological, physiological, and behavioral reactions to a particular scene or an image of the scene (e.g., multimedia content) may be referred to herein as physical arousal characteristic information. Physical arousal characteristic information may include raw physiological and behavioral signals (e.g., galvanic skin response, heart rate, facial expressions, etc.). Such information may be analyzed to determine a state of physical arousal. As used herein, the terms physical, psychological, physiological may be referred to collectively as "physical characteristics" for simplicity purposes.

The physical arousal characteristic information may be stored in connection with the multimedia content and/or separate from the multimedia content. In addition, the physical arousal characteristic information may be stored with or without an association with a user identification data. The user identification data can be any type of information that is uniquely associated with a user. The user identification data can be a personal identification code such as a globally unique ID (GUID), user number, social security number, or the like. The user identifier can also be a complete legal name, a nickname, a computer user name, or the like. The user identification data can alternatively include information such as a facial image or description, fingerprint image or description, retina scan, or the like. The user identification data can also be an internet address, mobile telephone number or other identification.

The physical arousal characteristic information and user identifier may be stored as image "metadata", which is a term of art used for any information relating to an image. Examples of other types of image metadata that can be incorporated in the physical arousal characteristic information that may be stored in the metadata include information derived from scene images (e.g., physical arousal characteristics associated with one or more subjects of the multimedia content) and non-image data such as image capture time, capture device, date of capture, image capture parameters, image editing history, viewing device, date of view, image viewing parameters, etc.

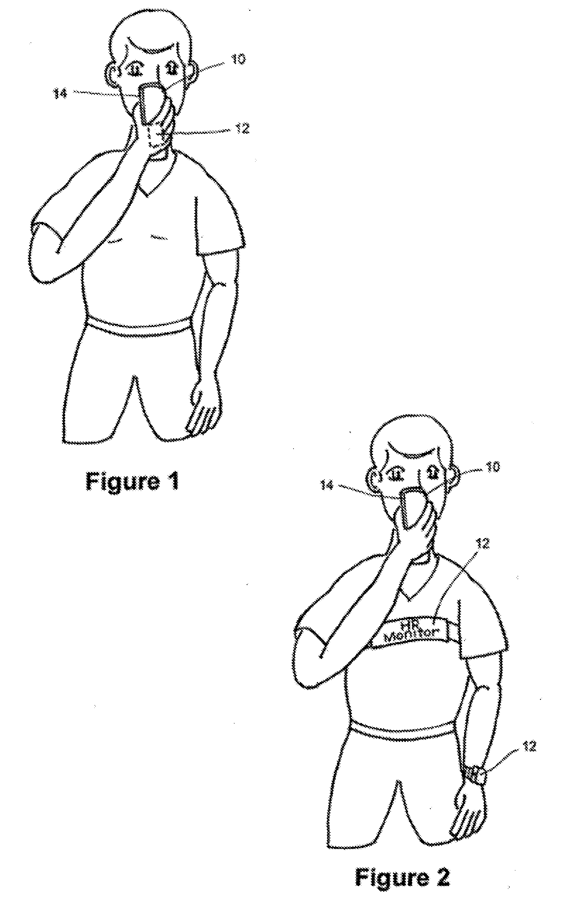

Referring initially to FIGs. 1, an exemplary electronic device 10 is shown being utilized by a user. The electronic device 10 includes a detector 12 for capturing one or more physical characteristics of a user of the electronic device 10. Referring to FIG. 1, the electronic device 10 includes a built-in detector 12 (e.g., a heart rate monitor) for detecting a heart rate associated with the user using the electronic device 10. A built-in detector refers to the detector being at least partially housed within a housing 14 of the electronic device 10. A heart rate monitor is a personal monitoring device that allows a user to measure their heart rate in real time and/or record their heart rate for later study.

In another embodiment, the electronic device 10 is operable to receive information from a remote detector 12, as illustrated in FIG. 2. As shown in FIG. 2, the detector 12 may be a wireless heart rate monitor in the form of a chest strap or a wrist watch. Although not shown, the detector 12 may also be wired heart rate monitor, which is coupled to the electronic device 10 through a signaling cable. When the detector 12 is wireless heart rate monitor, the detector transmits heart rate information to the electronic device 12 through a wireless communication medium. Heart rate information can be transmitted to the electronic device through a simple radio pulse or a unique coded signal from the detector 12 (e.g., Bluetooth, ANT, or other low-power radio link). For purposes of brevity, it will be assumed for the following disclosure that the detector is built-in (or housed within) the electronic device 10, such that the user's heart rate may be detected whenever the user is handling the electronic device 10.

Other exemplary detectors 12 include, for example, a camera (e.g., which measures facial expressions, shape of eyes, shape of mouth, structural relationships between facial features, eye movement, changes in skin around a user's eyes, eye characteristics, etc.), a galvanic skin response sensor(s) (e.g., measures skin conductance (oxygen) signals), an accelerometer (e.g., may be used to detect movement, nervousness of user, etc.), motion detection circuitry (e.g., may be used to detect movement, nervousness of user, etc.), etc. Thus, the detector 12 can be an optical detector, as well as, a non-optical detector. The one or more physical characteristics may be processed to identify a physical arousal characteristic associated with a user, as the user views multimedia content and/or experiences a real-life event. As set forth above, the physical characteristics may be physical, psychological, and/or physiological characteristics (e.g., galvanic skin response, heart rate, facial expressions (e.g., shape of eyes, shape of mouth, structural relationships between facial features, eye movement, facial expressions, changes in skin around a user's eyes, eye characteristics, physiological reactions, etc.).

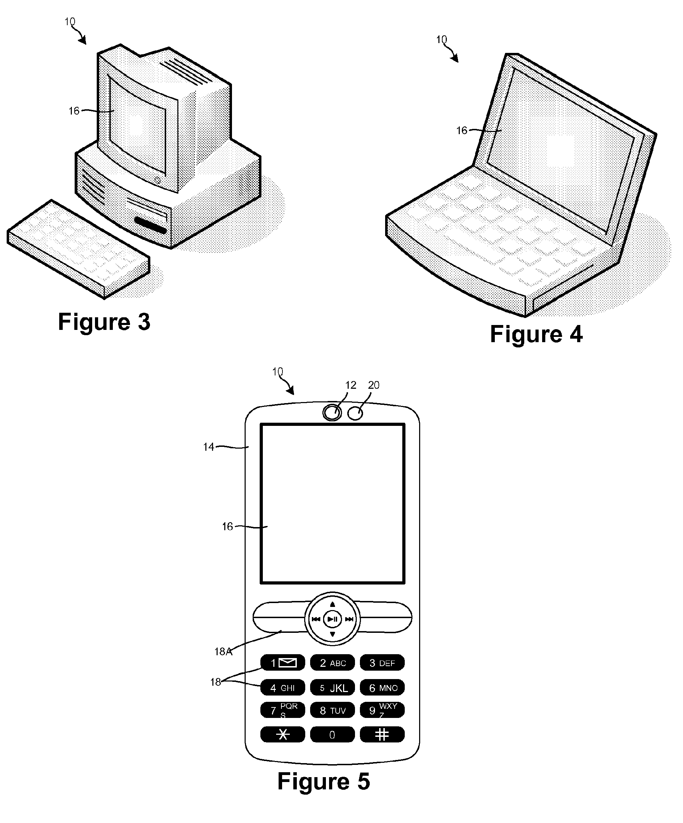

It is emphasized that the electronic device 10 need not be a mobile telephone, but could be a personal computer as illustrated in FIG. 3, a laptop as illustrated in FIG. 4, or any other electronic device that is capable of capturing one or more physical characteristics of the user while the user is perceiving multimedia content on the mobile telephone and/or perceiving a real-life event. Other exemplary devices include, for example, a mobile device, a gaming device, a portable gaming device, netbook, tablet pc, etc. Furthermore, one of ordinary skill in the art will appreciate that while the above description is provided with the detector 12 being a heart rate monitor, other design considerations may be utilized based on the type of detector or detectors being used. For example, if a galvanic skin response sensor is utilized, the detector may be positioned to obtain optimum galvanic response signals, which may be on the front, sides or back of the electronic device. Likewise, the detector 12 may be a pressure sensing device for measuring grip pressure applied by the user while grasping the mobile telephone. In the case of facial recognition being used to determine physical arousal, an optional front facing camera (video call camera) may be used.

Referring to FIG. 5, the illustrated electronic device 10 may be a portable, battery powered device. The electronic device 10 in the exemplary embodiment is a mobile telephone and will be referred to as the mobile telephone 10. The mobile telephone 10 is shown as having a "brick" or "block" design type housing 14, but it will be appreciated that other type housings, such as a clamshell housing or a slide-type housing, may be utilized without departing from the scope of the invention.

The mobile telephone 10 includes a display 16, keypad 18 and one or more function keys 18A. As is conventional, the display 16 displays information to a user such as operating state, time, telephone numbers, contact information, various navigational menus, etc., which enable the user to utilize the various feature of the mobile telephone 10. The display 16 may also be used to visually display content received by the mobile telephone 10 and/or retrieved from a memory 20 (FIG. 5) of the mobile telephone 10.

Similarly, the keypad 18 may be conventional in that it provides for a variety of user input operations. For example, the keypad 18 typically includes alphanumeric keys for allowing entry of alphanumeric information such as telephone numbers, phone lists, contact information, notes, etc. The mobile telephone may include special function keys 18A such as a "call send" key for initiating or answering a call, and a "call end" key for ending, or "hanging up" a call. Special function keys may also include menu navigation keys, for example, for navigating through a menu displayed on the display 16 to select different telephone functions, profiles, settings, etc., as is conventional. Other keys associated with the mobile telephone may include a volume key, audio mute key, an on/off power key, a web browser launch key, a camera key, etc. Keys or key-like functionality may also be embodied as a touch screen associated with the display 16.

The mobile telephone 10 includes conventional call circuitry that enables the mobile telephone 10 to establish a call and/or exchange signals with a called/calling device, typically another mobile telephone or landline telephone. However, the called/calling device need not be another telephone, but may be some other device such as an Internet web server, content providing server, etc.

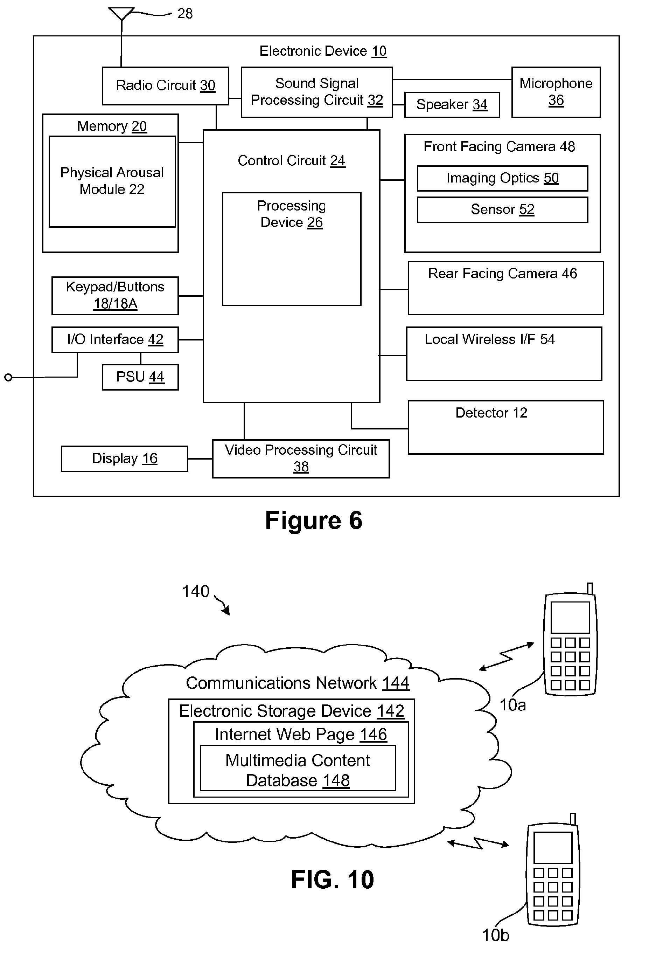

FIG. 6 represents a functional block diagram of the mobile telephone 10. With the exception of a physical arousal identification function 22, which is preferably implemented as executable logic in the form of application software or code stored within memory 20 of the mobile telephone 10 and the detector 12, according to the present invention, the construction of the mobile telephone 10 is otherwise generally conventional. The mobile telephone 10 includes a primary control circuit 24 that is configured to carry out overall control of the functions and operations of the mobile telephone 10. The control circuit 24 may include a processing device 26, such as a CPU, microcontroller or microprocessor.

The processing device 26 executes code stored in a memory (not shown) within the control circuit 24 and/or in a separate memory, such as memory 20, in order to carry out conventional operation of the mobile telephone 10. The memory 20 may be, for example, one or more of a buffer, a flash memory, a hard drive, a removable media, a volatile memory, a non-volatile memory or other suitable device. In addition, the processing device 26 executes code in accordance with the present invention in order to perform the physical arousal identification function 22.

It will be apparent to a person having ordinary skill in the art of computer programming, and specifically in applications programming for mobile telephones or other items of electronic equipment, how to program a mobile telephone 10 to operate and carry out the functions described herein. Accordingly, details as to the specific programming code have been left out for sake of brevity. Also, while the physical arousal identification function 22 is executed by the processing device 26 in accordance with the preferred embodiment of the invention, such functionality could also be carried out via dedicated hardware, firmware, software, or combinations thereof, without departing from the scope of the invention.

Continuing to refer to FIGs. 5 and 6, the mobile telephone 10 includes an antenna 28 coupled to a radio circuit 30. The radio circuit 30 includes a radio frequency transmitter and receiver for transmitting and receiving signals via the antenna 28, as is conventional. The radio circuit 30 may be configured to operate in a mobile communications network.

The mobile telephone 10 further includes a sound signal processing circuit 32 for processing the audio signal transmitted by/received from the radio circuit 30. Coupled to the sound processing circuit 32 are a speaker 34 and a microphone 36 that enable a user to listen and speak via the mobile telephone 10 as is conventional. The radio circuit 30 and sound processing circuit 32 are each coupled to the control circuit 24 so as to carry out overall operation.

The mobile telephone 10 also includes the aforementioned display 16 and keypad 18 coupled to the control circuit 24. The display 16 may be coupled to the control circuit 24 by a video decoder 38 that converts video data to a video signal used to drive the display 16. The video data may be retrieved from a video file that is stored in the memory 20, from received video data or from an external source, for example.

The mobile telephone 10 further includes one or more I/O interface(s) 42. The I/O interface(s) 42 may be in the form of typical mobile telephone I/O interfaces and may include one or more electrical connectors. As is typical, the I/O interface(s) 42 may be used to couple the mobile telephone 10 to a battery charger to charge a battery of a power supply unit (PSU) 44 within the mobile telephone 10. In addition, or in the alternative, the I/O interface(s) 42 may serve to connect the mobile telephone 10 to a wired personal hands-free adaptor (not shown). Further, the I/O interface(s) 42 may serve to connect the mobile telephone 10 to a personal computer or other device via a data cable or wireless link, etc. The mobile telephone 10 may receive operating power via the I/O interface(s) 42 when connected to a vehicle power adapter or an electricity outlet power adapter.

The mobile telephone 10 may include a rear facing camera 46 for taking digital pictures and/or movies. Image and/or video files corresponding to the pictures and/or movies may be stored in the memory 20 and/or a separate memory. In addition, the mobile telephone 10 may also include a front facing camera 48 (also commonly referred to as a video call camera). Front facing camera 48 faces in a direction towards the user during use of the mobile telephone 10. The front facing camera 48 may include imaging optics 50 to focus light from a portion of a scene that is within the field-of-view of the camera 48. The sensor 52 may convert the incident light into image data.

The display 16 may function as an electronic viewfinder and as part of an interactive user interface, in conjunction with a keypad 18 for accepting user inputs, for example. The display 16 may present content to the user. The detector 12 may detect physical characteristics of the user while the user is perceiving content through the display 16 and/or speaker 34. The display 16 and the speaker 34 may be referred to herein as rendering devices. A rendering device is a device that enables to a user to experience content through one of the user's senses (e.g., sight, hearing, touch, smell and taste). In view of the mobile telephone illustrated in Figures 5 and 6, exemplary rendering devices include speaker 34 and display 16. The detector 12 may also detect physical characteristics of a user while the user is experiencing a real-life event. For example, when the user is experiencing a real-life event (e.g., a meeting, an event for the user's child, a night out with friends, etc., physical arousal of the user may be monitored and correlated to an event stored on the user's mobile telephone. For example, the user may have a meeting scheduled in an electronic calendar application stored on the user's mobile telephone. During the meeting time, any detected physical arousal may be correlated to the meeting.

The mobile telephone 10 also may include a local wireless interface 54, such as a Bluetooth adaptor, for establishing communication with an accessory, hands-free adaptor, computer or other device. For example, the local wireless interface may also receive communications from detector 12 when the detector 12 is housed remotely from the mobile telephone 10, as discussed above with reference to FIG. 2.

The electronic device 10 may include call circuitry (e.g., radio circuit 30) that enables the mobile telephone 10 to establish a call and/or exchange signals with a called/calling device, which typically may be another mobile telephone or landline telephone. However, the called/calling device need not be another telephone, but may be some other device such as an Internet web server, content providing server, etc. Calls may take any suitable form. For example, the call could be a conventional call that is established over a cellular circuit-switched network or a voice over Internet Protocol (VoIP) call that is established over a packet-switched capability of a cellular network or over an alternative packet-switched network, such as WiFi (e.g., a network based on the IEEE 802.11 standard), WiMax (e.g., a network based on the IEEE 802.16 standard), etc. Another example includes a video enabled call that is established over a cellular or alternative network.

The mobile telephone 10 may be configured to transmit, receive and/or process data, such as text messages, instant messages, electronic mail messages, multimedia messages, image files, video files, audio files, ring tones, streaming audio, streaming video, data feeds (including podcasts and really simple syndication (RSS) data feeds), and so forth. Processing data may include storing the data in the memory 20, executing applications to allow user interaction with the data, displaying video and/or image content associated with the data, outputting audio sounds associated with the data, and so forth.

The memory 20 may include a physical arousal identification module 22. Alternatively, the physical arousal identification module 22 may be stored as firmware in the processing device 26, in separate memory (not shown) and/or in control circuit 24. When stored in memory 20, the physical arousal identification module 22 may be coupled to the controller 24 and may determine physical arousal associated with the viewer perceiving content on the mobile telephone based, at least in part, on the detected viewer information, as discussed below. The physical arousal identification module 22 generally utilizes heart rate of the associated user to determine a level of physical arousal for the user, while the user is viewing and/or listening to multimedia content emitted from the display 16 and/or speaker 34 or experiencing a real-life event. Acquisition of physical arousal identification information may be initiated in a variety of manners. For example, physical arousal identification information may be continuously monitored, may be monitored at or near the occurrence of an event that is stored in the mobile telephone (e.g., at or near a scheduled calendar event), may be triggered when the display 16 is activated, etc.

One of ordinary skill in the art will readily appreciate that there are a number of ways to quantify physical arousal of a user. Physical arousal is a physiological and psychological state of being awake or reactive to stimuli. Physical arousal involves the activation of the reticular activating system in the brain stem, the autonomic nervous system and the endocrine system, leading to increased heart rate and blood pressure and a condition of sensory alertness, mobility and readiness to respond. There are many different neural systems involved in what is collectively known as the arousal system. Four major systems originating in the brainstem, with connections extending throughout the cortex, are based on the brain's neurotransmitters, acetylcholine, norepinephrine, dopamine, and serotonin. When these systems are in action, the receiving neural areas become sensitive and responsive to incoming signals.

A user of a mobile telephone may be exposed to a variety of multimedia content sources. The content and user's pulse rate while viewing the content and/or experiencing the real-life event may be analyzed and saved. In addition, the user may fill out a questionnaire to specifically identify the level of physical arousal with the content. The information included in the questionnaire may be correlated to the user's detected heart rate while perceiving and/or experiencing the content. In addition, it may be desirable to measure a variety of physical characteristics of a user and/or subject to determine a degree of physical arousal of the user corresponding to the perceived content.

Multimedia content and/or real-life events can be further classified using a range of values for these categories. The physical arousal may then be stored along with a user identifier as part of the content metadata. It can also be stored in a separate file together with the image identifier (e.g., location information) and the user identifier, for example.

The physical arousal identification module 22 may be embodied as executable code that is resident in memory 20 and executed by the control circuit 24. In one embodiment, the physical arousal identification module 22 may be a program stored on a computer or machine readable medium. The physical arousal identification module 22 may be a stand-alone software application or form a part of a software application that carries out additional tasks.

It will be apparent to a person having ordinary skill in the art of computer programming, and specifically in application programming for cameras, mobile telephones and/or other electronic devices, how to program the electronic device 10 to operate and carry out logical functions associated with the physical arousal identification module 22 and how to program the electronic device 10 to operate and carry out logical functions associated with the physical arousal identification module 22. Accordingly, details as to specific programming code have been left out for the sake of brevity. Also, while the functions and may be executed by respective processing devices in accordance with an embodiment, such functionality could also be carried out via dedicated hardware or firmware, or some combination of hardware, firmware and/or software.

Also, through the following description, exemplary techniques for detecting physical arousal while viewing multimedia content on an electronic device and/or experiencing a real-life event are described. It will be appreciated that through the description of the exemplary techniques, a description of steps that may be carried out in part by executing software is described. The described steps are the foundation from which a programmer of ordinary skill in the art may write code to implement the described functionality. As such, a computer program listing is omitted for the sake of brevity. However, the described steps may be considered an algorithm that the corresponding devices are configured to carry out.

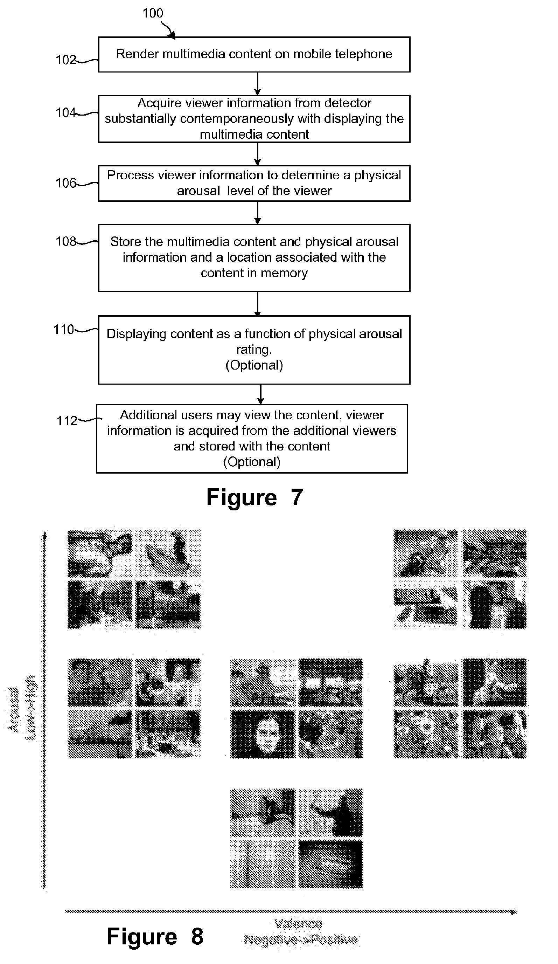

With additional reference to FIG. 7, illustrated are logical operations to implement an exemplary method 100 of indexing content rendered on a mobile telephone based on physical arousal of a viewer perceiving the content with the electronic device. One of ordinary skill in the art will appreciate that the logical operations may be configure to occur automatically and/or may be enabled and disabled based on user interaction.

At block 102, multimedia content is rendered on a rendering device (e.g., displayed on display 16 and/or audibly output on speaker 34) associated with the mobile telephone 10.

At block 104, viewer information is acquired from a detector 12 (e.g., a heart rate monitor) at a time substantially contemporaneous with the step of rendering content. The viewer information generally includes at least one of a physical characteristic associated with the viewer while perceiving the rendered content.

At block 106, the viewer information is processed to determine physical arousal of the user based upon the viewer information. For example, a physical arousing rating is determined based on prior physical arousal information stored for the user. At block 108, the physical arousal rating and a location for retrieving the content is stored in the memory of the 20 of the mobile telephone 10.

The physical arousal rating and location information for retrieving the content may be stored in a database 70 in the memory 20. The content may be searched or otherwise retrievable based on an identification of the content and/or the physical arousal rating associated with the content.

In one exemplary embodiment, the step of acquiring viewer information is triggered by a determination that the rendering device is displaying content. This may occur by activation of the front facing camera 48, since the front facing camera generally is only operative when the display 16 is active.

Block 110 is optional includes displaying at least some of the content stored in the database as function of physical arousal rating. For example, the content may be displayed in a user interface along an axis from low to high arousal rating. Optionally, the user interface may be combined with, for example, recency and/or frequency of use. Alternatively, recency and/or frequency may be an extra parameter to filter the results.

An exemplary user interface illustrating displaying content on a display 16 as a function of arousal rating is illustrated in FIG. 8. Physical arousal is displayed along the y-axis and ranges from low physical arousal to high physical arousal. Valence, also referred to as user reaction is displayed on the x-axis and may range from negative to positive. One of ordinary skill in the art will appreciate that the ranges may be varied by user and/or application.

As shown in FIG. 8, the user has a high physical arousal and a negative reaction to images dealing with death and snakes, for example. In contrast, the user also has high physical arousal and a positive reaction to chocolate and racing, for example. One of ordinary skill in the art will appreciate that this indexing will vary based on user and that the user may either manually or by answering a questionnaire, discussed above, train the physical arousal identification module 22 about the user's subjective likes and dislikes in order to gauge the user's reaction to the content and/or real-life event.

Optionally, at block 112, additional users may view the multimedia content, which may be stored on the electronic device 10, on a server, or any other desired electronic storage device. When the additional users view the multimedia content, viewer information associated with the additional may be detected and stored with the content. The viewer information may be used to determine physical arousal associated with one or more additional viewers for the viewed content. The physical arousal information may also be stored in the metadata with other viewer information that corresponds with the content.

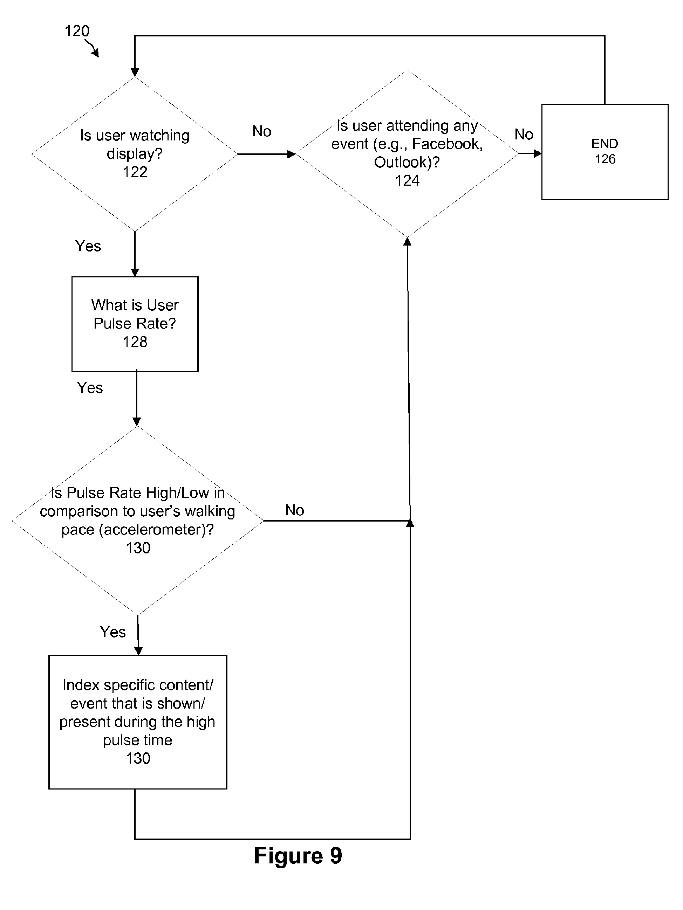

Referring to FIG. 9, an exemplary method 120 for acquiring physical arousal information is illustrated. At block 122, it is determined whether the user is rendering content with the mobile telephone 10. If "no", program flow moves to block 124. At block 124, it is determined if the user is attending a real-life event, as discussed above. If the user is not attending an event, program flow moves to block 126 and returns to block 122.

If the answer at block 122 or block 124 is "yes", program flow moves to block 128. At block 128, the user's pulse rate is determined. The user's pulse rate can be taken over a period of time or instantaneously depending on the application. At block 130, a comparison is made with the recently acquired heart rate with base line heart rate information associated with the user. For example, the recently acquired heart rate may be compared with the user's heart rate while walking, for example. At block 132, the content may be indexed to include acquired heart rate. Program flow then returns to block 126.

While the above description describes the user of a heart rate monitor, one of ordinary skill in the art will appreciate that other sensors, set forth above, may used in accordance with aspects of the present invention.

Referring to FIG. 10, a system 140 in accordance with aspects of the present invention is illustrated. The system may include an electronic storage device 142 that is remotely accessible from one or more users through electronic device 10A, 10B directly and/or through one or more other networks 144 (e.g., the Internet). The electronic storage device 142 may operable to host an Internet web page 146 and/or service. For example, the electronic storage device may host a social networking portal, such as Facebook, MySpace, etc, which allows user to establish an account with the portal and customize one or more web pages 146 to be viewed by others over the Internet.

In one exemplary use case, the user may upload multimedia content that includes a metadata component that identifies physical arousal of the author while viewing the subject. Additional viewers may view content and, if their electronic device is configured to acquire viewer information and determine the physical arousal of the viewer, the viewer's physical arousal and, optionally an identification of the user may be stored with the metadata with the multimedia content at the electronic storage device 142. The metadata of the multimedia content may keep track of all users and their detected physical arousal and/or a portion of the viewers.

For example, a user utilizing electronic device 10A may acquire multimedia content and upload the content to the electronic storage device 142. The multimedia content includes a media component and a metadata component. The metadata component includes at least one physical arousal level associated with the user of electronic device 10A. Once uploaded to the electronic storage device 142, the user utilizing electronic device 10B may search for images based on physical arousal of a user that viewed the content. When the user of electronic device 10B decides to view the multimedia content by selecting the multimedia content, the multimedia content is downloaded and displayed to the user of electronic device 10B. At substantially the same time, the physical arousal with the viewer of electronic device 10B may be obtained. The physical arousal level may be uploaded to the electronic storage device and stored with the metadata associated with the multimedia content. At a later time, the user of electronic device 10A may subsequently see the physical arousal of the multimedia content on the user associated with electronic device 10B. Other users may also view physical arousal that the multimedia content had on additional viewers of the multimedia content.

The multimedia content may also be searched by physical arousal of one or more of the viewers of the multimedia content. For example, a database 148 of multimedia content associated with the user account may be searched in any desirable for manner for information contained in the multimedia content and/or metadata. The multimedia content may be searched based upon specific physical arousal levels.

Benefits of the present disclosure make it possible to easily find content that the user felt "something about". This can be pictures, web pages, text passages in a book, YouTube clips, scenes in a movie or even parts of an audio book. In addition, calendar information and heart rate monitoring may be used to index events that the user felt during their life events (e.g., a lifelog). Another benefit of the present invention allows searching content based on arousal level (e.g., high, low, etc.) or simply searching for content that the user is currently feeling (based on the user's current level of arousal). In another embodiment, content providers may tailor advertisements to users based on the arousal level. Another benefit of the embodiment disclosed in FIG. 10 is that all user activity of a user may be monitored independently of which display (e.g., personal computers, televisions, tablets, netbooks, etc.) the user is using. For example, when a user is viewing multimedia content from a personal computers, televisions, tablets, netbooks, etc., a web cam or user login may be used to correlate the detected physical arousal with the content displayed on the display.

Although certain embodiments have been shown and described, it is understood that equivalents and modifications falling within the scope of the appended claims will occur to others who are skilled in the art upon the reading and understanding of this specification.

## Claims

1. An electronic device (10), comprising:
a rendering device (16) for rendering content to an associated user;
a sensor (12) for detecting at least one physical characteristic of the associated user while perceiving the content on the electronic device;
a memory (20) for storing user profile information, wherein the user profile information includes historical data for the one or more physical characteristics sensed by the sensor and physical arousal information for the associated user;
a controller (24) coupled to the rendering device and the sensor, wherein when the rendering device renders content to the associated user, the controller causes the sensor to capture at least one physical characteristic associated with the user; the controller calculates the physical arousal information associated with the rendered content; and the controller stores content information associated with the rendered content and the physical arousal information in the memory.

2. The electronic device of claim 1, wherein the memory includes a database (22) that associates the rendered content and the physical arousal information.

3. The electronic device of claim 2, wherein the database includes a location for retrieving the content.

4. The electronic device of claim 1, wherein the memory stores the physical arousal information in a computer file associated with the rendered content.

5. The electronic device of claim 3, wherein the physical arousal information is stored as metadata in the computer file associated with the rendered content.

6. The electronic device of claim 1, wherein the sensor is a pulse monitor that monitors heart rate of the associated user while the user is perceiving the content.

7. The electronic device of claim 6, wherein the sensor is housed within a housing (14) of the electronic device.

8. The electronic device of claim 5, wherein the sensor is housed apart from the rendering device and transmits acquired physical characteristic data of the associated user to the electronic device wirelessly.

9. The electronic device of claim 1, further including a front facing camera (48) that is configured to be operative when the user is perceiving the content on the display.

10. The electronic device of claim 1, wherein the sensor is a pressure sensor that measures a pressure associated with the user's handling of the electronic device.

11. The electronic device of claim 1, wherein the sensor is a moisture sensor that measures a moisture associated with the user's handling of the electronic device.

12. The electronic device of claim 1, wherein the content is at least one selected from a group consisting of an image, a video, a song, a web page, a blog.

13. The electronic device of claim 1, wherein the rendering device is a display.

14. The electronic device of claim 1, wherein the rendering device is a speaker (34).

15. A method of indexing content rendered on a electronic device (10), the method comprising:
rendering content on a rendering device (16) of an electronic device to an associated viewer;
acquiring viewer information from a detector (12) at a time substantially contemporaneous with the step of rendering content, wherein the viewer information includes at least one of a physical characteristic associated with the viewer while perceiving the rendered content;
processing the viewer information to a physical arousal rating; and
storing the physical arousal rating and a location for retrieving the content in a memory of the mobile telephone.

16. The method of claim 15, wherein the step of acquiring viewer information is triggered by a determination that the rendering device is displaying content, wherein a front facing camera (48) is used to determine whether the rendering device is displaying content.

17. The method of claim 15, wherein the physical arousal rating and location for retrieving the content for a plurality of content sources are stored in a database (22) for retrieval of the content based on the physical arousal rating.

18. The method of claim 15, further including displaying at least some of the content stored in the database as function of physical arousal rating.

19. The method of claim 16, wherein the database is searchable based at least upon the physical arousal rating associated with the viewer.

20. A method of indexing a real-life event experienced by a user of a mobile telephone (10), the method comprising:
acquiring viewer information from a detector (12) at a time substantially contemporaneous with a real-life event of the mobile telephone, wherein the viewer information includes at least one of a physical characteristic associated with the viewer while perceiving the real-life event;
processing the viewer information to a physical arousal rating; and
storing the physical arousal rating and a location for retrieving information about real-life event in a memory (20) of the mobile telephone.
